**Europäisches Patentamt**

(19) **European Patent Office** (11) Publication number: **0 043 669**

**Office européen des brevets** **A1**

(12) # EUROPEAN PATENT APPLICATION

(21) Application number: **81302808.1** (51) Int. Cl.³: **G 01 V 1/047**

(22) Date of filing: **22.06.81**

---

(30) Priority: **26.06.80 US 163664**

(43) Date of publication of application: **13.01.82**
**Bulletin 82/2**

(84) Designated Contracting States: **DE FR GB NL**

(71) Applicant: **Standard Oil Company, 200 East Randolph Drive, Chicago Illinois 60601 (US)**

(72) Inventor: **Volk, Karen Wagner, 14007 Court of Regents, Houston Texas 77069 (US)**

(74) Representative: **Ritter, Stephen David et al, Mathys & Squire 10 Fleet Street, London EC4Y 1AY (GB)**

---

(54) **Method and apparatus for seismic surveying utilising enhanced friction technique.**

㊾ A method and apparatus for seismic vibrator surveying which yields improved coupling of the vibrator (33) to the earth's surface with significantly reduced disruption of the earth's surface remaining after the vibrator is used. A preferred embodiment comprises a flat metal plate (32) with a flat earth-coupling layer (31) of neoprene bonded thereto which allows imparting of seismic energy into the earth directly through the surface of a paved roadway (34).

EP 0 043 669 A1

METHOD AND APPARATUS FOR SEISMIC SURVEYING
UTILISING ENHANCED FRICTION TECHNIQUE

## BACKGROUND OF THE INVENTION

### 1.  Field of the Invention

This invention relates to seismic surveying methods and apparatus and more particularly to an improved method and apparatus for more favorably coupling seismic vibrators to the earth to enhance the practicality and efficiency of the production of seismic waves generated thereby.

### 2.  Description of the Prior Art

Several different assemblies for imparting seismic energy into the earth with a vibrator have been described previously.  U.S. Patent No. 4,135,599, issued to W. Fair on January 23, 1979, entitled "Baseplate and Earth-Coupling Assembly for Shear Wave Transducers" describes baseplate assemblies with removable earth coupling structures in the form of inverted pyramids or cleats.  These structures are removable so that they may be varied in size in relation to the earth's surface and consistency.  Also describing a cleat coupling apparatus is U.S. Patent No. 3,159,232, issued to W. Fair on December 1, 1964, entitled "Shear Wave Transducer".  Therein the cleats are pyramids of uniform size and are a non-removable part of the baseplate assembly.  U.S. Patent No. 3,159,233, issued to F. Clynch, et al., on December 1, 1964, entitled "Seismic Transducer Construction", describes a seismic vibrator with a plurality of projections of varying size attached to the baseplates for coupling to the earth.  U.S. Patent No. 3,372,770, issued to F. Clynch on March 12, 1968, entitled "Shear Wave Transducing Apparatus," describes hydraulically driven lateral cleating braces outside the baseplate to maintain the baseplate in contact with the earth.  U.S. Patent No. 3,716,111, issued to M. Lavergne on February 13, 1973, entitled "Methods for Inducing Shear Waves and Device Therefore," employs a device with frictionless connection means or, alternately, stop members anchored in the earth for coupling of the device to the earth's surface.  Applicant has also been informed by industry sources that attempts at the use of a flat baseplate assembly with a polyurethane coating have been unsuccessful for seismic vibrator applications.

The above-mentioned attempts at coupling a seismic wave vibrator to the earth's surface have fallen somewhat short of their goal for several reasons.  First, the use of the previously mentioned earth coupling structures usually results in substantial damage to the earth's surface remaining after the seismic exploration is completed.  Such damage requires repair of the earth's surface after vibrators are used and virtually precludes the use of vibrators on any type of paved road surface.  Furthermore, for certain seismic exploration methods it is desirable to impart mainly seismic shear wave energy into the earth while minimizing the concurrent production of seismic compressional wave energy.  The use of the above-mentioned prior art vibrator coupling structures is known to result in the production of an undesirably large amount of compressional wave energy mingled with the desired shear wave energy.  Moreover, the use of the above-mentioned coupling structures is known to result in a significant undesirable reduction in the percentage of seismic energy reflected from subsurface horizons.  This reduction occurs as a result of a large percentage of the vibrator's generated energy being expended in the generation of an unwanted surface wave.  This unwanted surface

- 3 -   0043669

wave is enhanced due to the design of the prior art coupling structures.

### SUMMARY OF THE INVENTION

According to the present invention there is provided a method of seismic surveying of the subsurface of the earth using a vibrator seismic source which engages the earth's surface with a substantially flat earth engaging structure, comprising the steps of:

a) attaching to the bottom surface of said earth engaging structure a coupling material having a substantially flat earth engaging surface and a sufficient frictional coefficient between it and the earth's surface so that a substantially slip-proof coupling is achieved when said earth-engaging structure employing said coupling material is engaged with the earth;

b) engaging said attached coupling material with the earth;

c) imparting seismic energy into the earth with said vibrator seismic source through said earth engaging coupling material; and

d) recording the resulting seismic reflections from the earth's subsurface interfaces.

The invention also provides an improved apparatus for the earth-coupling structure of a seismic vibrator comprising a substantially flat plate with an earth-coupling material attached to its under surface, said earth-coupling material having a sufficiently high frictional coefficient between it and the earth's surface to provide a substantially slip-proof coupling therebetween.

The instant invention provides an improved method and apparatus for use with seismic vibrator machines in which the coupling of such machines with the earth may be enhanced without significantly damaging the earth's surface thereunder. Attaching a coupling material with a sufficient frictional coefficient, durability, and flexibility between the vibrator's baseplate and the earth's surface results in a substantially slip-proof coupling of the vibrator to the earth. This arrangement is especially desirable when the vibrator is being employed to generate seismic shear wave signals, since it results in a greatly improved ratio of shear-wave produced to compressional wave produced.

Embodiments of the invention will now be described in more detail by way of example with particular reference to the accompanying drawings of which:

Figure 1 shows ray paths of seismic energy imparted by the method and apparatus of the instant invention which are reflected from subsurface horizons back to the surface of the earth.

Figure 2 shows a well-known pyramidal baseplate earth coupling structure.

Figure 3 shows a preferred embodiment of the apparatus of the instant invention.

Figure 4 shows a seismic wave vibrator with the earth engaging coupling material surface structure of the instant invention attached.

Figure 5 shows an instrument layout used in measuring the energy imparted as a surface wave during a field test of the instant invention.

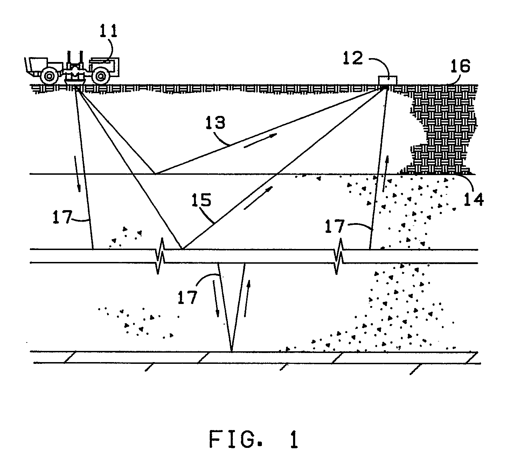

Referring to the drawings, Figure 1 shows seismic vibrator surveying including the use of a vibrator machine 11 to engage the earth's surface 16. After engaging the earth's surface, the vibrator is activated by varying the frequency of the vibrator's pilot sweep signal over a specified time period to generate seismic signals depicted as rays 13, 15, and 17. The seismic signal 13 is imparted into the earth through an earth engaging structure and travels downward into the earth where it is reflected from subsurface horizon 14 back towards the earth's surface. The reflected energy is recorded by a seismic receiving device 12 arranged in any conventional manner on the earth's surface. Seismic signals 15 and 17 are also shown traveling downward into the earth and reflecting off deeper subsurface horizons for recording as described above. By computer data processing techniques known to those skilled in the art of seismic data processing, the recorded seismic data is correlated with the pilot sweep signal of the vibrator and a representation of the subsurface reflection horizons (known as a seismic section) is made from the resulting processed data.

Figure 2 shows a well-known earth coupling structure. It employs two pyramidal projections 21 attached to a baseplate 22. These projections are intended to secure the baseplate to the earth by creating indentations in the soil.

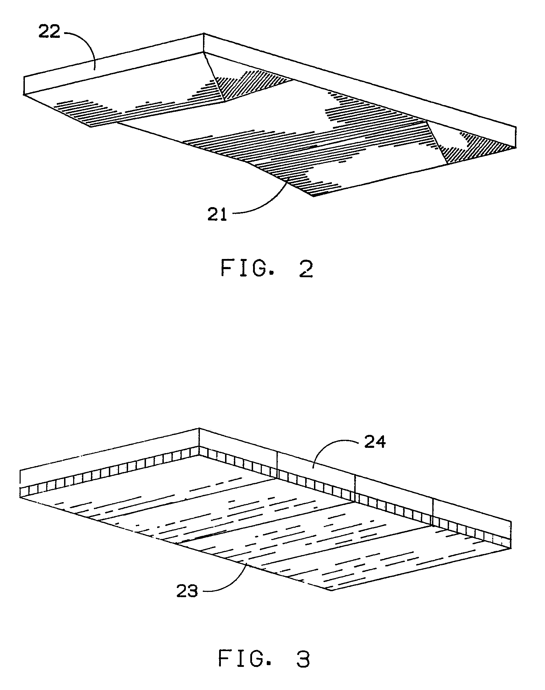

Figure 3 shows a preferred embodiment of the apparatus of the instant invention. The substantially flat earth engaging structure comprises a plate 24 to which is attached a pad 23 of a coupling material with a sufficient frictional coefficient between it and the earth so that when the material is pressed by the weight of the vibrator into contact with the earth's surface a substantially slip-proof coupling is produced. The plate 24 and the pad 23 may be of any convenient thicknesses suitable for supporting the vibrator and has sufficient durability for extended service. The pad 23 may be made of an elastomer such as natural or synthetic rubber or any other such material with sufficient frictional qualities and durability. It is also necessary that the coupling material be abrasion and tear resistant. Elastomers are especially useful for the coupling material attached to the baseplate since they can be specially formulated with additives mixed with the principal material of the elastomer to produce pads with the proper abrasion resistance, tear resistance and frictional qualities to provide a useful implementation of the instant invention. The pad 23 may be attached to the plate 24 in any convenient manner such as chemical bonding or even bolting, but in any case it must be securely attached so that it will not be sheared loose from the baseplate 24 as a result of the vibrator action.

The substantially flat earth engaging surface and the improved earth coupling resulting from the use of the frictional coupling material for the engaging surface 23 permits the imparting of seismic shear wave energy without substantial damage to the earth's surface. This permits the imparting of seismic signals directly into the earth through the surface of a paved roadway without damage to the roadway.

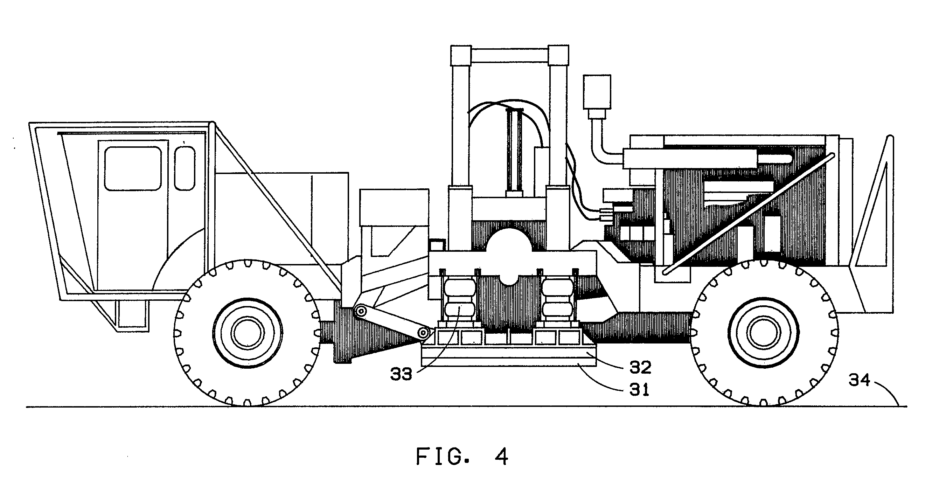

Figure 4 shows a conventional seismic wave vibrator truck with the earth engaging surface 31 and baseplate 32 of the instant invention attached to the vibrating mechanism 33 of the truck. The earth engaging surface 31 and baseplate 32 may be attached to the vibrator mechanism 33 in any convenient manner so that the surface may be vibrated to impart seismic energy into the earth. While imparting the seismic energy into the earth, the earth engaging surface (i.e., coupling pad) 31 is pressed into and held in contact with the earth's surface 34 in a conventional manner wherein most of the weight of the vibrator truck rests on the earth engaging surface during operation.

### EXAMPLE I

The apparatus and method of the instant invention were field tested at an Amoco Production Company test site, and the results were compared with the results from the use of a 15-inch deep pyramidal baseplate (similar to the one depicted in Figure 2).

The earth coupling structure of the instant invention used in the test was constructed as shown in Figure 3 from a flat 1-inch thick steel plate 24 with a 1-inch thick pad 23 of a specially compounded neoprene synthetic rubber elastomer attached to it. The neoprene compound used for the pad is formulated by the Oil States Rubber Company and is recommended as a protective coating for tubular goods and other metals used in offshore oil production platforms.

As is well-known in the rubber industry, all synthetic rubber compounds are made up of similar ingredients. The primary ingredient is a base polymer which constitutes approximately one-half of the final rubber. The next most abundant ingredient is a filler, usually carbon black. A curing agent, a chemical which causes the vulcanization of the rubber, is included. An accelerometer can be used to speed up the curing time. Additional ingredients can be added to accommodate any special conditions to which the rubber will be subjected. Some of these are antioxidants and antiozonants for weather resistance and a fungicide to inhibit bacterial growth.

Neoprene (polychloroprene $(C_4H_5Cl)_n$) was first introduced in 1931 by Du Pont and comprises a polymer of Chloroprene (2-Chlorobutadiene-1, 3). A typical neoprene formula would be as follows:

1. The polymer, Neoprene GNA:100 parts;
2. The vulcanizing agent, red lead ($Pb_3O_4$): 20 parts;
3. The actuator, N.A. 22 (Du Pont's registered trademark for 2-mercaptoimidazoline): 0.5 parts;
4. The antioxidant, Neozone D[3] (Neozone D is Du Pont's registered trademark for its antiozonant): 2 parts;
5. The antiozonant, Akroflex CD[4] (Du Pont's registered trademark for its antiozonant): 2 parts;
6. The fungacide, Ottacide P: 2 parts; and
7. The filler, MT carbon black: 68 parts.

This formula should yield the following physical properties: 100% modulus--275 psi; 300% modulus--1475 psi, tensile strength--2000 psi; elongation--560 psi; and hardness durometer shore A--65.

The neoprene compound so formulated has the above average abrasion resistance as measured by ASTM-D394 and -D1630.  Its tear strength, measured under ASTM-D624, is also high.  The adhesion of the neoprene to the metal plate is the strength of the rubber-metal bond and is measured by ASTM-D413 and -D429.

The bonding sequence of the neoprene to the metal is as follows:

1.  The metal is prepared with a primer and a suitable bonding agent.

2.  The uncured rubber is put in contact with the bonding agent.

3.  Heat and pressure are applied to complete the curing process.

In this bonding process, the primer and adhesive are cured by a chemical reaction, the elastomer is vulcanized, and the elastomer is bonded to the metal by chemical changes.

The neoprene pad 23 was attached by chemically bonding it to the 1" thick steel plate 24 by a method similar to the one used by Oil States Rubber Company in bonding neoprene to tubular materials.  The uncured neoprene used for the pad is produced in sheets of desired thickness in a conventional manner.  The metal baseplate must be prepared before attaching the neoprene by sand blasting to white metal and then cleaning the metal surface with methyl ethyl ketone or a similar solvent.  An adhesive primer such as Chemlock 205 is then painted on the metal surface and allowed to dry.  The bonding agent employed by Oil States Rubber Co. is then painted on the primed metal surface.  The neoprene is then placed on the prepared metal surface and is wrapped with nylon tape with 20 lbs. of tension applied to insure uniform compression of the neoprene over the entire surface of the metal.  The neoprene-covered metal is then heated in an autoclave to a temperature of at least 297°F with at least 50 psi steam pressure being concurrently applied for a predetermined time, whereby proper vulcanization of the neoprene occurs and secure attachment to the metal baseplate through chemical bonding is achieved. The predetermined time for curing is calculated from the standard cure time of the compound and the thickness of the rubber. During this process, the combination of metal expansion and the contraction of the nylon tape increases the compression force on the rubber several times its original value, thereby producing a secure bonding between the neoprene pad and the steel plate.

Four of these neoprene-metal plates each 64 inches by 24 inches by 2 inches in size, were prepared by Oil States Rubber Co. in the above-mentioned manner. They were then bolted to the gear racks of the vibrator mechanism of a seismic vibrator truck built by Mertz, Inc. The plates were connected to the vibrator mechanism so that they extended across the width of the truck and butted against each other along their 64-inch lengths. The overall earth-coupling structure thus created was essentially one surface 8 feet long and 64 inches wide.

The field test was performed at Mounds, Oklahoma, which has a relatively flat subsurface stratigraphy. The basement rock (the Arbuckle Formation) occurs at a depth of about 3000 feet, and it is covered with clay over a shaly lime sequence. A variety of of measurements were taken for comparing the performance of the flat earth-coupling baseplates of the instant invention with the results obtained using 15-inch pyramidal earth-coupling baseplates. These measurements included surface wave energy tests and shear wave reflection tests.

The shear wave reflection tests were performed in a conventional manner as follows: the spacing between the seismic wave receivers was 12.5 feet with eleven bunched groups of horizontal and vertical component receivers spread over an interval of 125 feet. The vibrator source point interval employed was 125 feet. Ten sweeps were made per vibrator point and a 12.5 feet move-up was used between sweeps. The vibrator pilot signal was varied from 5 Hz to 75 Hz at a 50% drive level.

The wave tests were recorded on 14 Hz horizontal component geophones L28D and on 30-Hz vertical component geophones L25D (both geophones are available from Mark Products, Inc.). The horizontal geophone traces were correlated with a 5-Hz to 75-Hz simulated pilot signal and the vertical geophone traces were correlated with a 10-Hz to 150-Hz simulated pilot signal. The vertical component traces require double the frequency of the pilot used in correlating, because seismic vibrators produce compressional waves at twice the frequency of the shear waves produced.

A reflected signal strength analysis was made for these wave tests with a digital log level indicator computer program--the results normalized with the 0 dB reference level corresponding to the recorded signal level using the 15" pyramid baseplate are displayed in Table 1. The recorded data was processed with velocity filters (rejecting waves with velocities less than 6,000 ft/sec. on the shear wave record) as well as with standard frequency filters before the digital log level indicator analysis was performed. The measurements were made on receiver traces covering depth ranges of 125 ft to 4375 ft on the reflection from the Woodford shale which has a time depth of approximately one second on the shear wave records. The amplitude of the recorded traces was calculated in decibels. Amplitude measurements so obtained were then used to quantitatively compare the amount of reflected shear wave and compressional wave energy generated by the flat baseplates of the instant invention relative to the results obtained with the conventional 15-inch pyramidal baseplates.

As shown in Table 1, the flat baseplate wave tests (using a shear wave vibrator) resulted in reflected shear wave energy at a level 23 dB greater than that obtained with the pyramidal baseplate, whereas the unwanted concurrently generated compressional waves were reduced by a factor of 17 dB by means of the instant invention.

0043669

### TABLE 1

| | Horizontal Phones | Vertical Phones |
|---|---|---|
| Flat Baseplates | 23 dB | -17 dB |
| 15" Pyramids | 0 (Ref.) | 0 (Ref.) |

Since some compressional waves are always generated while attempting to generate shear waves, the above-demonstrated reduction in the unwanted compressional waves is a significant advantage of the instant invention which comprises a very useful improvement over the known art.

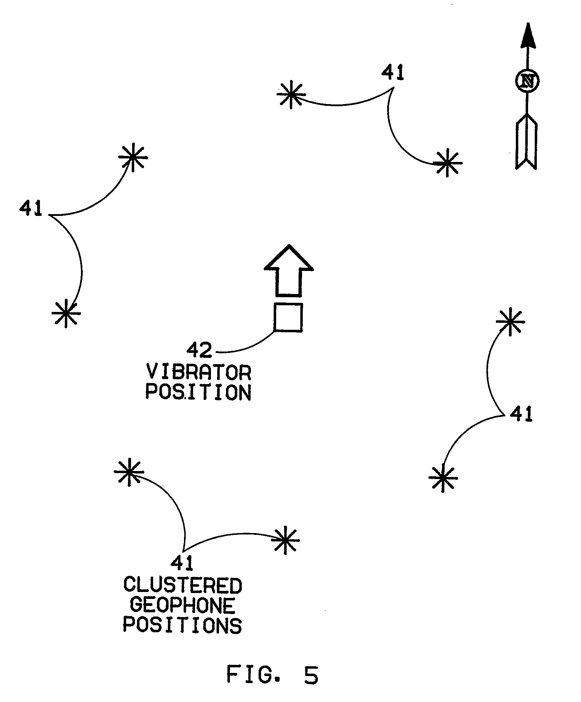

Another portion of the field tests involved surface energy radiation measurements. The source and receiver positions were laid out as in Figure 5 so that the vibrator position 42 was in the center of eight sets of clustered geophones 41 each located on varying azimuths from the source at a radius of 300 ft from the source. The arrow by the vibrator position 42 in Figure 5 indicates the direction the vibrator truck was facing during the surface energy measurements. Each group of clustered geophones contained 12 vertical component geophones (L25D's) and 12 horizontal component geophones (L28D's). Sixteen traces from each baseplate test were then analyzed with the digital log level indicator program to determine the surface energy radiation pattern. Two traces were recorded at each of the 8 surface clusters of geophones. Because these recordings were not laid out in standard geophone arrays, no significant pattern rejection of surface wave energy occurred. The seismic traces recorded thus substantially represented the total surface energy radiating from the shear vibrator at a given azimuth. The results of the surface energy measurements are shown in Table 2.

### TABLE 2

| | Horizontal Phones | Vertical Phones |
|---|---|---|
| Flat Baseplates | 85 dB | 80 dB |
| 15" Pyramids | 110 dB | 105 dB |

Analysis of this data shows that the amount of energy expended in the earth as a surface wave in both horizontal and vertical components is significantly reduced by the use of the flat baseplate of the instant invention as opposed to the use of the 15-inch pyramidal baseplates. This indicates that more downward directed seismic energy to be reflected from subsurface horizons is imparted by use of the instant invention than by that imparted by use of the known apparatus and techniques.

The foregoing discloses a method and apparatus for improving the coupling of a seismic wave vibrator to the surface of the earth. The use of this method and apparatus permits recording of improved seismic records. The instant invention also lessens to a considerable degree the damaging effects resulting from the use of currently available methods and apparatus, thus allowing the non-destructive use of seismic vibrators on paved roads.

Various changes may be made in the combination and arrangement of elements in the apparatus or steps in the method, as described in the Specification, without departing from the spirit and scope of the instant invention. It is to be understood that this Specification comprises a description of a preferred embodiment of the method and apparatus of the instant invention; the scope of the invention is not limited to this particular embodiment--rather it is defined by the appended claims.

CLAIMS:

1.    A method of seismic surveying of the subsurface of the earth using a vibrator seismic source which engages the earth's surface with a substantially flat earth engaging structure, comprising the step of:

a)   attaching to the bottom surface of said earth engaging structure a coupling material having a substantially flat earth engaging surface and a sufficient frictional coefficient between it and the earth's surface so that a substantially slip-proof coupling is achieved when said earth-engaging structure employing said coupling material is engaged with the earth;

b)   engaging said attached coupling material with the earth;

c)   imparting seismic energy into the earth with said vibrator seismic source through said earth engaging coupling material; and

d)   recording the resulting seismic reflections from the earth's subsurface interfaces.

2.    A method according to Claim 1 wherein said vibrator seismic source comprises a shear wave vibrator.

3.    A method according to Claim 1 or Claim 2 in which said coupling material comprises an abrasion and tear resistant material.

4.    A method according to any preceding claim in which said coupling material comprises an elastomer.

5.    A method of seismic surveying of the subsurface of the earth using a shear wave vibrator which engages the earth's surface with a substantially flat earth engaging structure, comprising the steps of:

a)   attaching to the bottom surface of said earth engaging structure an elastomeric coupling material, having a substantially flat earth engaging surface and a sufficient frictional coefficient between it and the earth's surface to provide a substantially slip-proof coupling therebetween;

b) engaging said elastomeric material in contact with the earth;

c) imparting seismic energy into the earth with said shear wave vibrator through said elastomeric material; and

d) making a shear wave seismic record of the resulting reflections from the earth's subsurface.

6. A method according to Claim 4 or Claim 5 wherein said elastomeric coupling material comprises a natural rubber.

7. A method according to Claim 4 or Claim 5 wherein said elastomeric coupling material comprises a synthetic rubber.

8. A method according to Claim 7 wherein said synthetic rubber comprises a neoprene compound.

9. A method according to any preceding claim wherein step b) is performed by engaging said elastomeric material to the earth's surface directly through the surface of a paved roadway.

10. An improved apparatus for the earth-coupling structure of a seismic vibrator comprising a substantially flat plate with an earth-coupling material attached to its under surface, said earth-coupling material having a sufficiently high frictional coefficient between it and the earth's surface to provide a substantially slip-proof coupling therebetween.

11. The apparatus of Claim 10 wherein said seismic vibrator comprises a shear wave vibrator

12. The apparatus of Claim 10 or Claim 11 wherein said earth-coupling material is an elastomer.

13.    The apparatus of Claim 12 wherein said elastomer is neoprene.

FIG. 1

FIG. 2

FIG. 3

0043669

FIG. 4

0043669

41

N

41

41

42
VIBRATOR
POSITION

41

41
CLUSTERED
GEOPHONE
POSITIONS

FIG. 5

European Patent
Office

**EUROPEAN SEARCH REPORT**

0043669

Application Number

EP 81 30 2808

## DOCUMENTS CONSIDERED TO BE RELEVANT

| Category | Citation of document with indication, where appropriate, of relevant passages | Relevant to claim |
|---|---|---|
| X | <u>GB - A - 2 025 051</u> (INST. FR. DU PETROLE)<br><br> * Page 1, lines 41-61; 75-89; 116-129; claims 1,2; figure *<br><br>-- | 1-5,7, 9-12 |
| X | <u>US - A - 3 557 900</u> (L.G. KILMER)<br><br> * Column 3, line 70 - column 4, line 9; abstract; figures *<br><br>-- | 1,3,4, 7,10, 12 |
| | <u>GB - A - 1 204 179</u> (A.G. BODINE)<br><br> * Page 3, lines 81-120; figures 1-3 *<br><br>---- | 1,4,6, 7,10, 12 |

**CLASSIFICATION OF THE APPLICATION (Int. Cl.3)**

G 01 V 1/047

**TECHNICAL FIELDS SEARCHED (Int. Cl.3)**

G 01 V 1

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-10-1981 | HAASBROEK |

EPO Form 1503.1   06.78